# EUROPÄISCHE PATENTANMELDUNG

(11) **EP 1 993 190 A2**
(43) Veröffentlichungstag der Anmeldung: **19.11.2008**
(21) Anmeldenummer: 08102756.7
(22) Anmeldetag: 19.03.2008
(51) Int. Cl.: H02K 7/08

(54) **Wellenanlaufanordnung, Stellantrieb sowie Fensterhebereinrichtung**

(30) Priorität: 18.05.2007 DE 102007023389
(71) Anmelder: ROBERT BOSCH GMBH, 70442 Stuttgart (DE)
(72) Erfinder: Hertweck, Volker, 76532, Baden-Baden (DE); Anding, Lars-Dirk, 72202, Nagold (DE)

(57) **Zusammenfassung**

Die Erfindung betrifft eine Wellenanlaufanordnung, insbesondere für einen Stellantrieb (1) in einem Kraftfahrzeug, umfassend eine drehbar gelagerte Welle (5) und eine Anlauffläche (12, 13) zum axialen Abstützen eines Wellenendes. Erfindungsgemäß ist vorgesehen, dass die Anlauffläche (12, 13) ringförmig ist. Ferner betrifft die Erfindung einen Stellantrieb (1) sowie eine Fensterhebereinrichtung (2) mit einem Stellantrieb (1).

## Beschreibung

### Stand der Technik

Die Erfindung betrifft eine Wellenanlaufanordnung gemäß dem Oberbegriff des Anspruchs 1, einen Stellantrieb mit einer Wellenanlaufanordnung gemäß Anspruch 11 sowie eine Fensterhebereinrichtung mit einem Stellantrieb gemäß Anspruch 12.

Wellenanlaufanordnungen bei denen sich eine, insbesondere fliegend gelagerte, Welle in axialer Richtung an einer Anlauffläche abstützt, sind allgemein bekannt. So zeigt beispielsweise die DE 38 04 219 C2 einen Stellantrieb für einen Sitz in einem Kraftfahrzeug, bei dem sich eine als Ankerwelle mit Getriebeschneckenabschnitt ausgebildete Welle je nach Drehrichtung eines elektrischen Antriebsmotors entweder in die eine oder die andere Axialrichtung an jeweils einer Anlauffläche abstützt. Die im Polgehäuse angeordnete Anlauffläche verläuft exakt senkrecht zur Längsmittelachse der Welle, wohingegen die außerhalb des Polgehäuses angeordnete Anlauffläche gekrümmt ist, damit eine Auslenkung der Welle in Bezug auf ein mit dem Getriebeschneckenabschnitt der Welle kämmendes Getrieberad während des Betriebs minimiert wird.

Insbesondere bei in Fensterhebereinrichtungen eingesetzten Stellantrieben ist es wichtig, dass der eine Wellenanlaufanordnung umfassende Stellantrieb eine ausreichende Selbsthemmung aufweist, um zu verhindern, dass sich die Fensterscheibe in der Fahrzeugtür in der Folge der Schwerkraft unbeabsichtigt nach unten bewegt. Zur Erzielung einer ausreichenden Selbsthemmung ist es bekannt, zusätzliche innermotorische Komponenten, wie beispielsweise eine Kupplung oder eine Schlingfeder, einzusetzen. Zusätzlich oder alternativ werden Spezialfette verwendet, die eine hohe Haftreibung bei gleichzeitig geringer Gleitreibung realisieren.

### Offenbarung der Erfindung

### Technische Aufgabe

Der Erfindung liegt die Aufgabe zugrunde, eine Wellenanlaufanordnung vorzuschlagen, bei der auf einfache Weise eine ausreichende Selbsthemmung realisiert ist. Ferner besteht die Aufgabe darin, eine ausreichende Selbsthemmung bei einem Stellantrieb sowie einer Fensterhebereinrichtung, insbesondere in einem Kraftfahrzeug, zu realisieren.

### Technische Lösung

Diese Aufgabe wird hinsichtlich der Wellenanlaufanordnung mit den Merkmalen des Anspruchs 1 gelöst. Hinsichtlich des Stellantriebs wird die Aufgabe mit den Merkmalen des Anspruchs 11 und hinsichtlich der Fensterhebereinrichtung mit den Merkmalen des Anspruchs 12 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt die Erkenntnis zugrunde, dass die auf die Welle wirkenden Reibungskräfte und somit die Selbsthemmung des Systems durch eine Vergrößerung des Reibradius, also des Abstandes der Anlauffläche von der Längsmittelachse der Welle, erhöht werden kann. Um eine überraschend einfache und damit kostengünstige Steigerung der Selbsthemmung einer Wellenanlaufanordnung zu erzielen, schlägt die Erfindung vor, die Anlauffläche zum Abstützen eines Wellenendes ringförmig, also mit Radialabstand zur Längsmittelachse der Welle, anzuordnen. Bei Bedarf kann zusätzlich eine, insbesondere kreisförmige, Anlauffläche im Bereich der Längsmittelachse vorgesehen werden. Bevorzugt ist jedoch eine Ausführungsform, bei der ausschließlich eine ringförmige Anlauffläche vorgesehen ist. Durch die Wahl des Radialabstandes der Anlauffläche von der Längsmittelachse der Welle sowie die Wahl der Radialerstreckung der Anlauffläche kann die Selbsthemmung der Wellenanlaufanordnung beeinflusst werden, wobei die Selbsthemmung mit zunehmendem Abstand und zunehmender Radialerstreckung größer wird. Aufgrund der erfindungsgemäßen Ausbildung der Anlauffläche kann auf zusätzliche Motorkomponenten, wie beispielsweise eine Kupplung oder eine Schlingfeder, zur Vergrößerung der Selbsthemmung verzichtet werden. Ebenfalls ist es aufgrund der Erfindung denkbar, auf die im Stand der Technik eingesetzten Spezialfette zu verzichten.

Aus Symmetriegründen, insbesondere zur Erzielung einer symmetrischen Reibkraftbelastung der drehbar gelagerten Welle, ist es von Vorteil, wenn die Anlauffläche konzentrisch zur Längsmittelachse der Welle angeordnet ist, also die Längsmittelachse senkrecht auf einer gedachten, die Anlauffläche aufnehmenden Ebene steht.

Alternativ dazu ist es denkbar, dass eine gedachte, die Anlauffläche aufnehmende Ebene mit der Längsmittelachse der Welle einen Winkel von ungleich 90° einschließt. Hierdurch können auf die Welle und damit auf Radiallager der Welle wirkende Querkräfte bewirkt werden, die die Selbsthemmung der Wellenanlaufanordnung weiter erhöhen. Die schräge Anordnung der Anlauffläche relativ zu der Längsmittelachse der Welle kann entweder dadurch realisiert werden, dass das die Anlauffläche tragende Bauteil gegenüber der Längsmittelachse der Welle geneigt angeordnet ist und/oder dadurch, dass das die Anlauffläche bildende bzw. aufweisende Bauteil mit einer Schräge versehen ist, an der die Anlauffläche ausgebildet ist.

Insbesondere aus fertigungstechnischen Gründen ist es von Vorteil, wenn die Anlauffläche, zumindest näherungsweise, kreisringförmig ausgebildet ist.

Bevorzugt wird die Anlauffläche von einem Umfang einer Ausnehmung gebildet. Dabei kann der die Anlauffläche bildende Umfang bzw. Umfangsabschnitt der Ausnehmung konisch ausgebildet sein. Ferner ist es realisierbar, dass der die Anlauffläche bildende Umfang der Ausnehmung eine Umfangskante einer, insbesondere kreisförmig konturierten, bevorzugt zylindrischen Ausnehmung ist. Die Ausnehmung kann entweder unmittelbar in ein Bauteil eingeformt oder später, beispielsweise durch Bohren eingebracht werden. Die Ausnehmung kann auch durch das Vorsehen eines Umfangswulstes gebildet werden, der die radial äußere Begrenzung der Ausnehmung darstellt. Die Längsmittelachse der Ausnehmung kann gemäß einer ersten Alternative mit der Längsmittelachse der Welle fluchten, so dass die Anlauffläche konzentrisch zur Längsmittelachse der Welle angeordnet ist, oder aber die Längsmittelachse der Ausnehmung kann gemäß einer zweiten Alternative mit der Längsmittelachse der Welle einen Winkel einschließen, so dass die gedachte, die Anlauffläche aufnehmende Ebene schräg zur Längsmittelachse verläuft, also mit der Längsmittelachse einen Winkel von ungleich 90° einschließt.

Fertigungstechnisch ist es besonders günstig, die Ausnehmung, deren Umfang die Anlauffläche bildet, als Durchgangsöffnung in einem Bauteil auszubilden. Dabei kann die Ausnehmung beispielsweise als Bohrung in das Bauteil eingebracht werden oder aber, insbesondere durch eine entsprechende Ausformung einer Druckguss-, Spritzguss- oder Pressform, unmittelbar bei der Herstellung des Bauteils in das Bauteil aus Metall oder Kunststoff eingeformt werden.

In Ausgestaltung der Erfindung ist mit Vorteil vorgesehen, dass die Anlauffläche, insbesondere durch Vorsehen einer Ausnehmung, an einem Getriebegehäuse und/oder einem Polgehäuse eines Antriebsmotors angeordnet ist. Insbesondere ist die Anordnung der ringförmig ausgebildeten Anlauffläche im oder am Polgehäuse für Fensterhebereinrichtungen von entscheidendem Vorteil, da sich in der Regel die Ankerwelle beim Öffnen einer Fensterscheibe gegen eine Anlauffläche im bzw. am Polgehäuse abstützt. Für eine derartige Öffnungsbewegung ist eine ausreichende Selbsthemmung notwendig, die mit Hilfe der ringförmigen Anlauffläche auf einfache Weise realisiert werden kann.

Das Vorsehen einer ringförmigen Anlauffläche ist insbesondere bei Wellenanlaufanordnungen interessant, bei denen die Welle fliegend gelagert ist, also die Welle mit Axialspiel zwischen zwei Anlaufflächen angeordnet ist. Bevorzugt sind zur fliegenden Lagerung der Welle mindestens zwei, vorzugsweise in axialer Richtung beabstandete, Radiallager vorgesehen, die ein axiales Verstellen der Welle zwischen den sich gegenüberliegenden Anlaufflächen ermöglichen.

Besonders zweckmäßig ist eine Ausführungsform, bei der das an der ringförmigen Anlauffläche drehend anliegende Wellenende ballig ausgeformt ist. Bevorzugt wird dabei das Wellenende von einem drehfest an der Welle festgelegten Anlaufpilz gebildet.

Bevorzugt ist eine Ausführungsform, bei der zu beiden Axialseiten der Welle jeweils eine ringförmige Anlauffläche vorgesehen ist. Mit Vorteil sind dabei beide Wellenenden, die vorzugsweise von jeweils einem Anlaufpilz gebildet werden, ballig ausgeformt.

Ferner umfasst die Erfindung einen Stellantrieb mit einer zuvor beschriebenen Wellenanlaufanordnung. Dabei bildet die Welle eine Ankerwelle eines elektrischen, insbesondere drehrichtungsumkehrbaren Antriebsmotors und ist zumindest an einem Axialabschnitt als Getriebeschnecke ausgebildet, trägt also ein Schneckengewinde zur kämmenden Kopplung mit einem Getrieberad. Durch das Vorsehen mindestens einer zuvor beschriebenen ringförmigen Anlauffläche an zumindest einem axialen Ende der Ankerwelle, vorzugsweise innerhalb des Polgehäuses, kann auf einfache Weise eine ausreichend große und dauerhaft beständige Selbsthemmung des Stellantriebs realisiert werden.

Vorzugsweise ist der Stellantrieb Teil einer Fensterhebereinrichtung, insbesondere in einem Kraftfahrzeug, bei der der Stellantrieb mit einer Fensterscheibe, insbesondere in einer Kraftfahrzeugtür, wirkverbunden ist, so dass die Fensterscheibe mittels des Stellantriebs angehoben und abgesenkt werden kann.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine unvollständige, schematische Darstellung einer Fensterhebereinrichtung mit einem eine Wellenanlaufanordnung aufweisenden Stellantrieb,
- Fig. 2:: eine Anlaufscheibe mit einer ringförmigen Anlauffläche und
- Fig. 3:: eine alternative Anlaufscheibe mit einer zu einer Längsmittelachse einer in diese eingebrachten Öffnung schräg verlaufenden Stirnseite.

### Ausführungsformen der Erfindung

In den Figuren sind gleiche Bauteile und Bauteile mit der gleichen Funktion mit den gleichen Bezugszeichen gekennzeichnet.

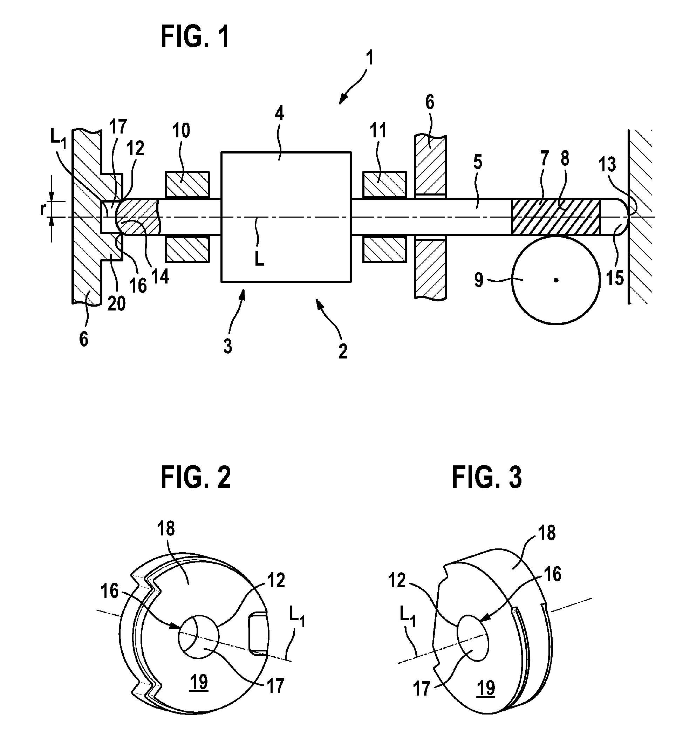

In Fig. 1 ist ein Stellantrieb 1 einer Fensterhebereinrichtung 2 in einem Kraftfahrzeug gezeigt. Der Stellantrieb 1 umfasst einen drehrichtungsumkehrbaren, elektrischen Antriebsmotor 3 mit einem Motoranker 4, der drehfest auf einer Welle 5 festgelegt ist. Weitere Komponenten des Antriebmotors 3, wie in einem ausschnittsweise dargestellten Polgehäuse 6 angeordnete Permanentmagnete sowie eine Kommutierungseinrichtung sind aus Übersichtlichkeitsgründen nicht dargestellt. Die Welle 5 ist in einem außerhalb des Polgehäuses 6 liegenden Abschnitt als Getriebeschnecke 7 mit einem Schneckengewinde 8 ausgebildet, welches mit einem Schneckenrad 9 kämmt, das mit der zu verstellenden, nicht dargestellten Fensterscheibe in einer Kraftfahrzeugtür, insbesondere mittels eines Seilzugs, wirkverbunden ist.

Wie sich aus Fig. 1 ergibt, ist die Welle 5 fliegend gelagert. Zur radialen Lagerung ist benachbart zu jeweils einer axialen Seite des Motorankers 4 ein Radiallager 10, 11 angeordnet. Die den Motoranker 4 einrahmenden Radiallager 10, 11 ermöglichen eine axiale Verstellung der Welle 5 in den Grenzen zweier in axialer Richtung beabstandeter Anlaufflächen 12, 13. Je nach Drehrichtung des Antriebsmotors 4 stützt sich die Ankerwelle 5 entweder mit ihrem in der linken Zeichnungshälfte angeordneten axialen ersten Endabschnitt 14 an der ersten Anlauffläche 12 oder mit ihrem in der rechten Zeichnungshälfte angeordneten axialen zweiten Endabschnitt 15 an der zweiten Anlauffläche 13 außerhalb des Polgehäuses 6 ab. Dabei sind die beiden axialen Endabschnitte 14, 15 identisch ausgebildet und durch jeweils einen ballig, d.h. konvex ausgeformten Anlaufpilz realisiert.

Die an einem Getriebegehäuse ausgebildete zweite Anlauffläche 13 verläuft exakt senkrecht zu einer Längsmittelachse L der Welle 5 und ist eben ausgebildet, so dass sich die Welle 5 näherungsweise punktförmig (kreisförmig) im Bereich ihrer Längsmittelachse in axialer Richtung bei entsprechender Drehrichtung des Antriebsmotors 3 an der zweiten Anlauffläche 13 abstützt.

Bei in entgegengesetzter Richtung angetriebenem Antriebsmotor 3 wird eine nicht gezeigte Fensterscheibe angehoben. Dabei stützt sich die Welle 5 mit ihrem ersten axialen Endabschnitt 14 an der unmittelbar am Polgehäuse 6 ausgebildeten ersten Anlauffläche 12 ab. Die erste Anlauffläche 12 wird von einer Umfangskante 16 einer zylindrischen Ausnehmung 17 gebildet, wobei die Ausnehmung 17 von einer Umfangswand 20 (Umfangswulst) umschlossen ist. Die Längsmittelachse L₁, der als Sacklochbohrung ausgebildeten Ausnehmung 17 fluchtet dabei mit der Längsmittelachse L der Welle 5, so dass die kreisringförmige Anlauffläche 12 konzentrisch zur Längsmittelachse L der Welle 5 angeordnet ist. Wie sich aus Fig. 1 ergibt, ist die kreisringförmige Anlauffläche 12 in einem Abstand r (Reibradius) von der Längsmittelachse L und in diesem Ausführungsbeispiel von der Längsmittelachse L₁ der Öffnung 17 angeordnet, wodurch sich eine erhöhte Selbsthemmung ergibt. Die Selbsthemmung des Stellantriebs 1 ist bei dem gezeigten Ausführungsbeispiel dann, wenn sich die Welle 5 an der kreisringförmigen Anlauffläche 12 abstützt, also die Fensterscheibe angehoben wird, höher als bei in die entgegengesetzte Drehrichtung angetriebenen Antriebsmotor, also wenn sich die Welle 5 an der gegenüberliegenden, ebenen Anlauffläche 13 zumindest näherungsweise punktförmig abstützt. Alternativ ist es denkbar, gegenüber beiden Axialseiten der Welle jeweils eine ringförmige Anlauffläche 12 vorzusehen. Ferner ist es denkbar, die ringförmige Anlauffläche 12 nicht unmittelbar an dem Polgehäuse 6 anzuordnen, sondern beispielsweise an einer Anlaufscheibe, die an dem Polgehäuse 6 festgelegt ist. Ebenso muss die Längsmittelachse L₁ der Ausnehmung nicht mit der Längsmittelachse L der Welle 5 fluchten, sondern kann mit dieser einen Winkel von ungleich 90° einschließen.

Fig. 2 zeigt eine gemäß der Erfindung ausgebildete Anlaufscheibe 18, die beispielsweise an einem Polgehäuse oder einem Getriebegehäuse festgelegt sein kann. Zu erkennen ist, dass die Anlaufscheibe 18 zumindest näherungsweise zentrisch von einer als Durchgangsöffnung ausgebildeten Ausnehmung 17 durchsetzt ist. Eine kreisringförmige Umfangskante 16 der zylindrischen Ausnehmung 17 auf einer in der Zeichnungsebene vorderen Stirnseite 19 der Anlaufscheibe 18 bildet dabei eine kreisringförmige Anlauffläche 12 zur kreisringförmigen Anlage einer Welle mit Axialabstand zu der Längsmittelachse der Welle. Beide Stirnseiten der Anlaufscheibe 18 sind in diesem Ausführungsbeispiel parallel zueinander angeordnet. Die Anlaufscheibe 18 kann derart fixiert werden, dass die Längsmittelachse L₁ der Ausnehmung 17 mit der Längsmittelachse abzustützenden Welle fluchtet oder mit dieser einen Winkel einschließt.

In Fig. 3 ist eine alternativ ausgeführte Anlaufscheibe 18 mit einer als Durchgangsöffnung ausgebildeten Ausnehmung 17 gezeigt. Auch hier wird die Anlauffläche 12 von einer Umfangskante 16 der als Durchgangsöffnung ausgebildeten Ausnehmung 17 gebildet. Im Unterschied zu dem Ausführungsbeispiel gemäß Fig. 2 verläuft jedoch die Stirnseite 19 nicht senkrecht zur Längsmittelachse L₁ der Ausnehmung 17, sondern leicht angewinkelt zu dieser, so dass sich insgesamt eine im Wesentlichen oval konturierte Anlauffläche 12 für eine, insbesondere fliegend gelagerte, Welle ergibt.

## Patentansprüche

1. Wellenanlaufanordnung, insbesondere für einen Stellantrieb (1) in einem Kraftfahrzeug, umfassend eine drehbar gelagerte Welle (5) und eine Anlauffläche (12, 13) zum axialen Abstützen eines Wellenendes, **dadurch gekennzeichnet,**
**dass** die Anlauffläche (12, 13) ringförmig ist.

2. Wellenanlaufanordnung nach Anspruch 1,
**dadurch gekennzeichnet, dass** die Anlauffläche (12, 13) konzentrisch zur Längsmittelachse (L) der Welle (5) angeordnet ist.

3. Wellenanlaufanordnung nach einem der Ansprüche 1 oder 2,
**dadurch gekennzeichnet, dass** eine gedachte, die Anlauffläche (12, 13) aufnehmende Ebene mit der Längsmittelachse (L) einen Winkel von ungleich 90° einschließt.

4. Wellenanlaufanordnung nach einem der vorhergehenden Ansprüche,
**dadurch gekennzeichnet, dass** die Anlauffläche (12, 13) kreisringförmig ist.

5. Wellenanlaufanordnung nach einem der vorhergehenden Ansprüche,
**dadurch gekennzeichnet, dass** die Anlauffläche (12, 13) von einem Umfang einer, insbesondere kreisförmig konturierten, Ausnehmung (17) gebildet ist.

6. Wellenanlaufanordnung nach Anspruch 5,
**dadurch gekennzeichnet, dass** die Ausnehmung (17) als Durchgangsöffnung ausgebildet ist.

7. Wellenanlaufanordnung nach einem der vorhergehenden Ansprüche,
**dadurch gekennzeichnet, dass** die Anlauffläche (12, 13) an einer Anlaufscheibe (18), oder einem Getriebegehäuse, oder einem Polgehäuse (6) eines Antriebsmotors (3) angeordnet ist.

8. Wellenanlaufanordnung nach einem der vorhergehenden Ansprüche,
**dadurch gekennzeichnet, dass** die Welle (5) fliegend gelagert ist.

9. Wellenanlaufanordnung nach einem der vorhergehen Ansprüche,
**dadurch gekennzeichnet, dass** das, insbesondere von einem Anlaufpilz gebildete, Wellenende ballig ausgeformt ist.

10. Wellenanlaufanordnung nach einem der vorhergehenden Ansprüche,
**dadurch gekennzeichnet, dass** beidseitig der Welle (5) jeweils eine ringförmige Anlauffläche (12, 13) zum axialen Abstützen der Welle (5) vorgesehen ist.

11. Stellantrieb, insbesondere in einem Kraftfahrzeug, mit einer Wellenanlaufanordnung nach einem der vorhergehen Ansprüche, bei dem die Welle (5) eine abschnittsweise als Getriebeschnecke (7) ausgebildete Ankerwelle eines elektrischen, insbesondere drehrichtungsumkehrbaren, Antriebsmotors (3) ist.

12. Fensterhebereinrichtung, insbesondere in einem Kraftfahrzeug, mit einem Stellantrieb (1) gemäß Anspruch 11.
